(19) **Europäisches Patentamt European Patent Office Office européen des brevets**

(11) **EP 4 764 264 A1**

(12) **EUROPEAN PATENT APPLICATION**

(43) Date of publication:
24.06.2026 Bulletin 2026/26

(21) Application number: 25223986.8

(22) Date of filing: 16.12.2025

(51) International Patent Classification (IPC):
*F16H 63/34* (2006.01)        *F16D 1/10* (2006.01)

(52) Cooperative Patent Classification (CPC):
**F16H 63/3425; F16D 1/10; F16D 1/101;**
B60Y 2300/207; F16D 2001/103

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 23.12.2024 IT 202400029700

(71) Applicant: FPT Industrial S.p.A.
10156 Torino (IT)

(72) Inventors:
• **MANTOVAN, Alessandro**
10156 Torino (IT)
• **PESOLA, Fabio**
10156 Torino (IT)
• **CANTONE, Francesco**
10156 Torino (IT)
• **PIACENZA, Gianni**
10156 Torino (IT)

(74) Representative: **Fiume, Orazio et al**
**Praxi Intellectual Property S.p.A.**
**Corso Vittorio Emanuele II, 3**
**10125 Torino (IT)**

(54) **TORSIONAL SHOCK DAMPING SYSTEM OF A PARKING WHEEL AND AN ELECTRIC AXLE EQUIPPED WITH THE DAMPING SYSTEM**

(57)    Torsional stress damping system of a parking wheel (W), wherein the parking wheel is associated with a relative drive shaft (TS) by means of a splined coupling, wherein the splined coupling is made between a torsionally elastic sleeve (S) and the drive shaft, wherein the sleeve and the drive shaft are coupled by means of a first and a second splined coupling (S1, S2) appropriately spaced axially from each other, wherein the parking wheel is associated with the sleeve in correspondence with the second splined coupling (S2) and wherein the first splined coupling (S1) defines a first value of connection stiffness between the drive shaft and the sleeve, greater than a second value of stiffness defined by the second splined coupling (S2).

Fig. 1

EP 4 764 264 A1

**Description**

FIELD OF THE INVENTION

The present invention relates to the field of electric axles and in particular, to a damping system applied to a parking wheel.

STATE OF THE ART

In the electric-powered axle filed, solutions known as e-axles or e-beams are well-known, meaning electric-powered axles or bridges. In these solutions, the axle/bridge itself carries one or more electric machines configured to exchange torque with the axle half-shafts, and therefore with the wheels, to provide torque or generate energy depending on the vehicle operating conditions. In particular, commercially available solutions use electric machines in a so-called "on-axis" configuration, where the axis of the electric machine is coaxial with the axis of the axle/bridge half-shafts, a configuration that is particularly advantageous in terms of space.

Solutions known as "off-axis" are also well-known, where the electric machine's driveshaft is parallel but not coaxial with the axis of the half-shafts.

Regardless of the configuration implemented, electric axles can also be equipped with a transmission locking system that includes a parking wheel and a pawl that locks the parking wheel to a corresponding housing by means of a spring-loaded slider connected to an actuator.

The parking wheel locks the transmission, preventing any movement of the vehicle wheels. The parking wheel cooperates with the vehicle parking brake.

However, while the parking brake is based on friction elements, the locking pawl is configured to engage the parking wheel via a positive fit and is generally a pawl that engages a gear wheel.

Examples of axles equipped with such a parking wheel are WO2022106681 and US10630140.

It is important to understand that the "parking brake device" and the "park pawl mechanism" shown in these prior art documents, respectively, do not have friction elements; the locking is achieved through positive coupling.

When the engagement is achieved with the vehicle stationary, there are no particular problems.

However, when the engagement is achieved with the vehicle in motion, below a certain threshold, i.e., at low speeds of 1-2 km/h, there is a risk of damaging the components of the electric axle, including the parking brake system and/or the components that interface with it, due to the pawl engaging in the parking wheel. This can result in suddenly stopping the transmission via the parking brake system, which transforms the kinetic energy of the rotor into a torque pulse that can reach values that are excessive for the mechanical resistance of the interconnected components when subjected to sudden deceleration of the rotor itself. Evidently, this problem occurs when the electric vehicle rotor is not disconnected or disconnectable from the transmission to which the parking lock system is associated. This problem is further amplified when the parking lock system is located on the driveshaft of an electric axle.

Solutions are known that aim to limit these torque peaks. For example, the parking wheel can be connected to its rotor shaft using friction elements or resilient elements, operationally interposed between the parking wheel and its shaft.

Such solutions are considered expensive, maintenanceintensive, or would lead to oversizing the components.

Unless specifically excluded in the detailed description below, the content of this chapter is to be considered an integral part of the detailed description.

SUMMARY OF THE INVENTION

The purpose of the present invention is to propose a system for damping torsional overtorque phenomena to be applied to a parking wheel of an electric axle, capable of preventing damage to the electric axle itself.

In addition to an alternative solution to the prior art, the aim is also to present a simpler and more economical solution than the prior art.

The basic idea of the present invention is to connect the parking wheel to the corresponding drive shaft using an elastic sleeve. The sleeve and the shaft are coupled by two splined couplings suitably spaced axially from each other, in which the first splined coupling defines a torsional rigidity of the connection between the drive shaft and the sleeve that is greater than the second splined coupling.

The parking wheel is associated with or integral with the sleeve at the second splined coupling.

This difference in behavior between the first and second splined couplings is due, according to a first variant of the invention, to the fact that the first coupling has a first clearance between the flanks of the respective teeth, which is smaller than the second clearance between the flanks of the respective teeth of the second splined coupling.

Thus, in idle conditions, the second splined coupling is not operational, as the flanks of the respective teeth are mutually spaced.

Conversely, the first splined coupling is always operational, as the flanks of the respective teeth are in mutual contact or are fitted with interference. Therefore, the second splined coupling begins to operate later than the first splined coupling, during the propagation of a torque peak between the rotor of the electric machine and the parking wheel locked with respect to the casing, that is, only after the flanks of the respective teeth come into mutual contact, due to the torsional deformation of the sleeve.

Alternatively, or in combination with this solution, the driveshaft is equipped with a weakening zone, determined by the shape of its cross-section profile, between the first and second teeth of the two splined couplings. This allows the second splined coupling to begin operating late during the propagation of a torque peak, after the weakening zone has reached an increased stiffness value, due to the deformation induced by the torque peak, such that the second splined coupling is operational and comparable to the stiffness of the first splined coupling.

For both solutions, the interconnection stiffness through the second splined coupling varies during the propagation of a torque peak, starting from a minimum stiffness value, at most zero, when the flanks of the teeth are mutually spaced. Advantageously, torque peaks are absorbed at least partially by torsional deformation of the sleeve and preferably also by torsional deformation of the weakening zone of the sleeve and the drive shaft.

These weakening zones or stiffness adjustments can be achieved either by profiling the cross-section of the components or by means of radial grooves, either through or without a through-passage, with respect to the component walls.

Specifically, following engagement of the parking wheel, an initial elastic phase is identified, involving the propagation of a torque peak, in which the first splined coupling rotates the sliding sleeve, which deforms torsionally. The first elastic phase is characterized by an initial value of torsional stiffness in the connection between the parking wheel and its drive shaft.

The deformation of the sleeve, absorbing the peak, leads to an attenuated transfer of torque from the rotor to the parking wheel.

At the end of the elastic phase, the sleeve and shaft can be considered a single body with substantially rigid behaviour, now exhibiting a stiffness value higher than the first connection stiffness value offered in the elastic phase.

The effect of the different connection stiffness is that, under transient conditions, a reaction of the second splined coupling is delayed compared to a reaction of the first splined coupling.

According to this description, the adjective "rigid" indicates a stiffness value at least twice greater than the adjective "elastic" attributed to the sleeve/driveshaft coupling in the two phases indicated above.

According to a preferred embodiment of the present invention, an electric axle is presented with a compact construction configuration and capable of minimizing the impulsive load caused by the activation of the parking lock system while the vehicle is in motion with the rotor of the electric machine rotating.

This technical solution can also be applied to a transmission equipped with an automatic transmission of a vehicle with a combustion engine, in which the torque peak is due to the inertia of the vehicle during the activation of the parking lock system while the vehicle is in motion.

The rotor of the electric machine is integral with the driveshaft to which the parking wheel is associated as described above.

Advantageously, through this construction configuration, the electric machine, the shaft, the parking wheel, and the pawl are subjected to less stress than traditional solutions that connect the parking wheel to a drive shaft via a single splined coupling.

Preferably, the electric machine is arranged inside the casing and comprises a stator, a tubular drive shaft having a first end and a second end opposite the first, emerging from a rotor of the electric machine connected to a drive shaft defining said drive shaft to which the parking wheel is associated. Furthermore, the electric axle according to the present invention comprises a reduction unit, preferably epicyclic, of the simple type with a sun gear, at least one satellite, and a crown, or a "stepped planetary gearset," also called as "compound" with at least two interconnected satellites, having an input port, preferably defined by a sun gear, connectable for torque transmission to the drive shaft. This reduction gear is arranged axially with respect to the electric machine, specifically proximal to the first end of the drive shaft. The electric axle also includes a differential at least partially nested in the reduction gear. The first and second half-shafts are coaxial and are operationally connected to the differential, and the first half-shaft is nested in the drive shaft. According to the invention, the electric drive axle includes the aforementioned parking lock system arranged axially with respect to the electric machine, specifically proximal to said second end.

Through this design, it is possible to transmit to the locking system a torque lower than that applied to the half-shafts, exploiting the torque reduction ratio of the reduction gear, output from the sunroof, and since the parking unit is upstream of the transmission and its reductions.

Furthermore, the damping characteristics of the coupling between the drive shaft and the locking system ensure the protection of the electric machine.

The dependent claims form an integral part of this specification.

## DETAILED DESCRIPTION OF THE DRAWINGS

The construction and functional characteristics of the electric axle can be better understood from the detailed description that follows, which refers to the attached figures representing a preferred and non-limiting embodiment, in which:

- Fig. 1 shows a schematic view of a first preferred embodiment of the present invention;
- Fig. 1a shows a view of a Z-Z transverse section of Figure 1 relating to a portion of the device of the present invention;
- Figs. 1b and 1c show detailed perspective views, with parts removed, of portions of Figure 1 of the teeth of the splines S1 and S2;

- Fig. 2 shows a schematic view of a parking system according to the prior art, useful for comparison with the solution of Figure 1;
- Fig. 3 shows the same schematic view of Figure 1, highlighting functional features that differentiate it from the known solution of Figure 2;
- Fig. 4 shows a time profile of the torque transfer from the rotor to the parking wheel through the damping system of the present invention;
- Fig. 4a shows the time profile of the torque transfer that would occur without the measures of the present invention according to Figure 2;
- Fig. 5 shows a schematic view of a further embodiment of the invention;
- Fig. 6 shows a schematic view of an electric axle drive implementing the damping system of the present invention. The same reference numbers and letters in the figures identify the same elements or components or functions.

It should also be noted that the terms "first," "second," "third," "upper," "lower," and the like may be used here to distinguish various elements. These terms do not imply a spatial, sequential, or hierarchical order for the modified elements unless specifically indicated or inferred from the text.

The elements and features illustrated in the various preferred embodiments, including the drawings, may be combined with each other without departing from the scope of protection of this application as described below.

DETAILED DESCRIPTION OF THE INVENTION

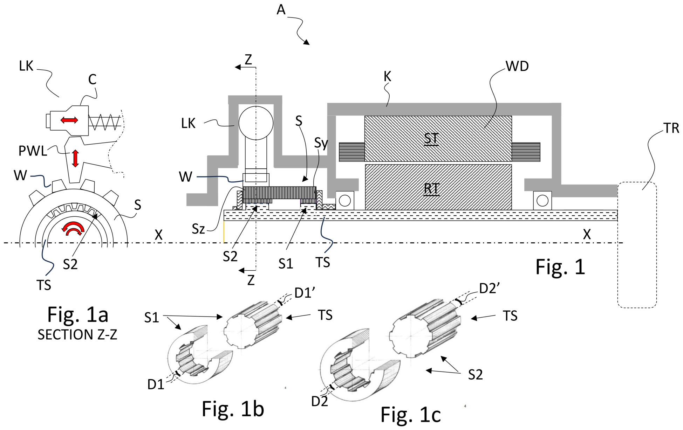

Figure 1 schematically shows a parking wheel W stably associated with a drive shaft TS, which, as we will see later, can coincide with the drive shaft of an electric vehicle WD.

The association, according to the present invention, is achieved by means of an elastic sleeve S.

The sleeve S has an axial extension several times greater than the thickness of the parking wheel W.

The parking wheel is locked to an axle casing K by means of a system LK, fixed to the casing, configured to engage the parking wheel W in a controlled and reversible manner, preventing it from rotating relative to the casing and therefore relative to the axle itself and the vehicle frame. The parking wheel W is secured approximately at a second end Sz proximal to the second splined coupling S2 of the sleeve opposite the first end Sy proximal to the first splined coupling S1 of the same sleeve S.

The sleeve S is then connected to the shaft TS by two splined couplings S1 and S2, appropriately spaced from each other in the axial direction X.

Preferably, the first splined coupling S1 has a smaller axial extension than the second splined coupling S2.

The portion of the sleeve between the first and second splined couplings does not, by virtue of its shape, contact the drive shaft TS. In other words, the sleeve contacts the drive shaft exclusively through the teeth of the splines S1 and S2.

According to a first preferred variant of the invention, the first splined coupling S1 has a very low clearance between the flanks of the respective complementary teeth or a true interference such that the flanks are constantly in mutual contact.

Therefore, it can be assumed that the clearance between the teeth of the first splined coupling is practically zero or negligible.

Conversely, the flanks of the teeth of the second splined coupling S2 do not contact each other due to a second clearance between the flanks of the respective teeth, which is greater than the first clearance, at least in rest conditions, i.e., in stationary conditions.

The amount of clearance or interference between the flanks of the teeth of the splined couplings S1 and S2 is given by comparing the dimensions D1-D1' and D2-D2', i.e., the width of the teeth/spaces shown in Figures 1b and 1c.

This implies that the torque transmission in stationary conditions between the sleeve S and the drive shaft TS occurs exclusively through the first splined coupling S1.

However, when a torque peak passes through the sleeve S/drive shaft TS coupling, due to the sudden locking of the parking wheel W, the sleeve S, reacting on the parking wheel W connected and locked from rotation by the LK system, deforms torsionally around its respective development axis X, bringing the flanks of the second splined coupling S2 into mutual contact.

When the second splined coupling S2 is operational, i.e., the teeth of the respective gear teeth are in mutual contact, the stiffness of the sleeve S/drive shaft TS assembly is maximum.

In rest conditions, the second splined coupling S2 is designed so that the flanks of its respective gear teeth are spaced apart.

Rest conditions are achieved when there is no transfer of torque peaks through the sleeve S, i.e., when the LK parking system is not activated or the torque transfer is constant, for example, when after the LK parking system is activated the vehicle is parked on a slope under static axle load conditions.

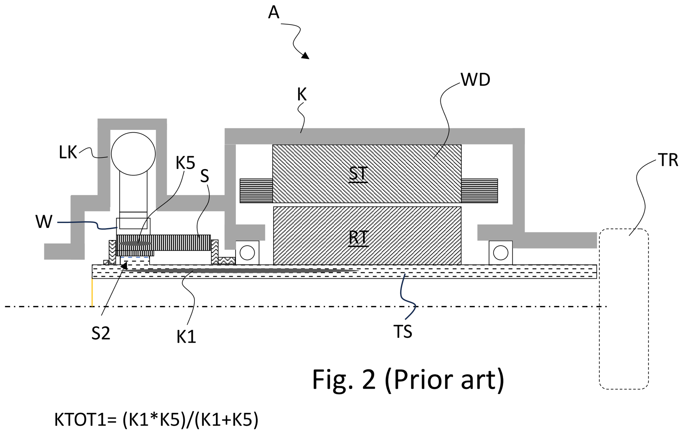

The variant in Figure 2, however, reproduces a known coupling configuration of the sleeve S with respect to the shaft TS, i.e., with the presence of a single splined coupling S2. In this configuration, the system transfers to the wheel W any cup peaks that may arise during the actuation of the parking system LK.

For convenience, the same reference symbols are also used for Figure 2.

This configuration is characterized by a unique torsional stiffness value given by the following simplified relationship: KTOT1 = (K1 * K5) / (K1 + K5).

Where K1 is the stiffness of the working portion of the crankshaft and K5 is the intrinsic stiffness of the single splined coupling S2.

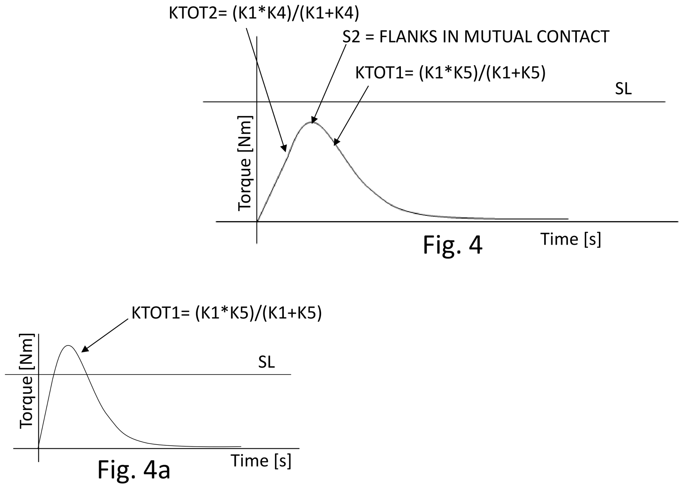

The temporal progression of the torque propagation seen by the wheel W over time, relative to KTOT1, is shown in Figure 4a.

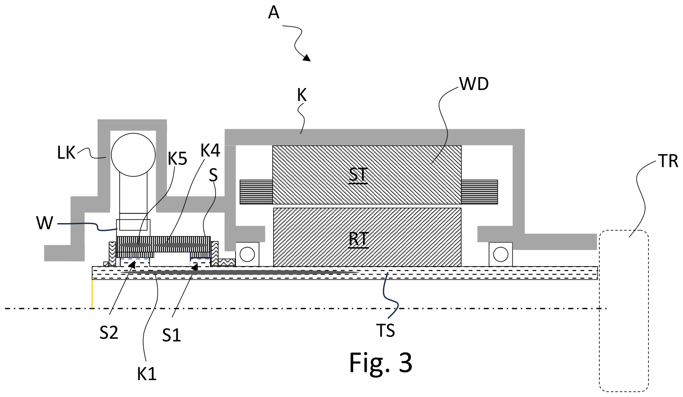

With reference to Figure 3, the different zones of the device are highlighted, offering different torsional stiffness values useful for describing the temporal progression of activation of these zones.

According to the present invention, with reference to the time profile T of the torque propagation seen from the wheel W in Figure 4, the stiffness assumes a first value in the first elastic phase given by the following simplified relationship:

$$- \quad KTOT2 = (K1*K4) / (K1+K4),$$

and

A second value, in the rigid phase, given by the following simplified relationship, which comes into play after the second splined coupling becomes operational:

$$- \quad KTOT1 = (K1*K5) / (K1+K5),$$

where K1 is the stiffness of the working portion of the crankshaft TS, K4 is the stiffness provided by the first splined coupling S1, and K5 is the stiffness of the second splined coupling provided by the sleeve S.

Evidently, K5 > K4. It is sufficient that K5 is at least twice K4.

Analysing Figure 4, it is noted that the intensity of the peak torque transferred through the drive shaft TS/sleeve S coupling is significantly lower than the graph in Figure 4a, relating to the solution in Fig. 2, according to the prior art.

The maximum value of this trend identifies the instant at which the second splined coupling S2 begins to operate, for example when the teeth of its respective gear teeth come into mutual contact due to the torsional deformation of the sleeve S.

The straight-line SL indicates a maximum torque value tolerable by the axle components.

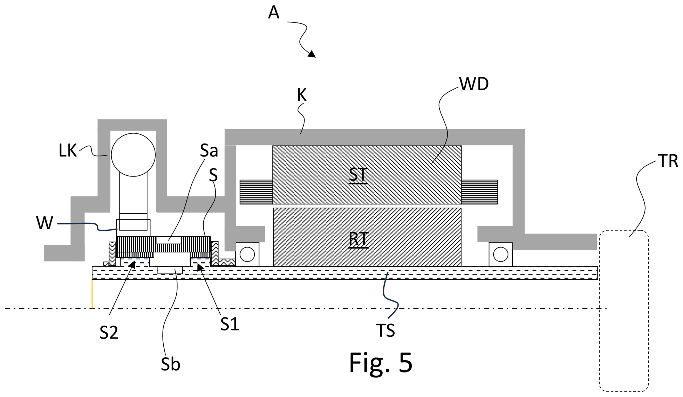

According to a second variant of the invention described in FIG. 5, it inherits the configuration described in Figures 1, 1a, 1b, 1c, and 3, in which the sleeve S and the drive shaft TS are equipped with weakening zones Sa and Sb arranged axially between the first splined coupling S1 and the second splined coupling S2.

According to this variant, the flanks of the teeth of the second spline coupling S2 may or may not be in mutual contact at rest, as the weakening zones Sa and Sb lead to an effect similar to that of the variant in Figures 1 and 3.

During the propagation of a torque peak through the sleeve S/driveshaft TS coupling, these weakening zones Sa and Sb facilitate the calibration of the torsional deformation of the components, so that the second toothing S2 begins to operate after the deformation of first the sleeve S and then the driveshaft TS in the respective weakening zones has been completed.

The weakening zones Sa Sb are preferably created by reducing the cross-section of the shaft TS or the sleeve S. In addition or in combination, radial, through, or blind splines can be created, in such a number and shape as to further calibrate the torsional stiffness of the drive shaft TS and the sleeve S.

It can therefore be stated that the second splined coupling S2 is interfaced with the rotor of the electric machine RT by an interface with a lower stiffness than the interface created by the first splined coupling S1.

APPLICATION EXAMPLE

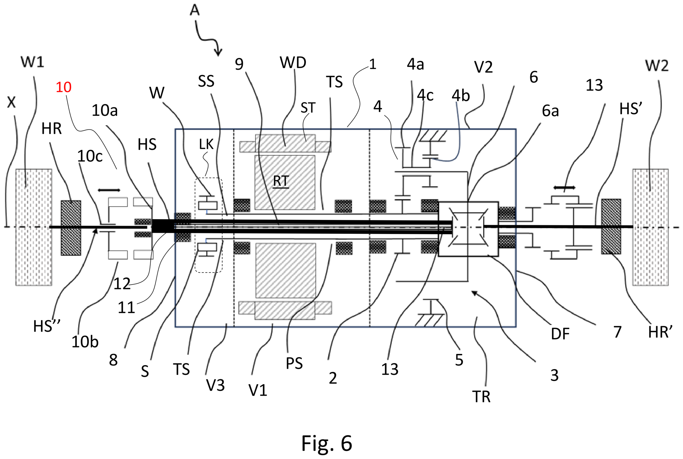

According to a preferred embodiment of the present invention, Fig.6 shows an electric axle A for a vehicle, comprising a casing 1, an electric machine WD arranged inside the casing, and a first and a second half-shaft HS, HS' arranged longitudinally at least partially inside the casing 1 and arranged coaxially with respect to an axis X. The half-shafts HS, HS' protrude longitudinally from opposite sides with respect to the casing 1 and in use the wheels W1, W2 of the vehicle are each connected to a respective half-shaft. The electric machine WD has a stator ST rigidly connected to the casing 1 and a rotor RT coaxial with the X axis, so that on the basis of this construction configuration the electric axle can be defined as being of the 'on-axis' type, i.e. the axis of the electric machine also coincides with the X axis defined by the half-shafts HS and HS' and the wheels W1 and W2. The electric machine WD is arranged in a first housing compartment V1 inside the crankcase 1, and is electrically connected in use to an energy source, e.g. a battery pack (not illustrated) on board the vehicle, and is configured to exchange energy with it, in particular receiving it to generate a torque to provide traction to the wheels W1, W2, i.e. functioning as an electric motor, or to function in reverse, i.e. receiving a torque transmitted by the wheels to generate electrical energy that is stored in the vehicle battery, i.e. functioning as an electric generator. Furthermore, the electric axle A comprises a tubular drive shaft TS, arranged inside the crankcase 1 coaxially with the X axis, which is fixed to the rotor of the electric machine RT. In particular, this drive shaft TS has a first end PS and a second end SS opposite to the first, both emerging with respect to the rotor of the electric machine, and the first semi-axle HS is nested longitudinally at least partially inside the drive shaft TS. The electric axle A also comprises an epicyclic reduction gear 3 of the type called stepped planetary gearset arranged in a second compartment V2 of the crankcase 1, axially flanked by the first compartment V1, in an axial position with respect to the electric machine WD, and in particular in a proximal position to the first end PS. In particular, the epicyclic reduction gear 3 comprises an input port 2 operationally connected in torque transmission to the drive shaft TS, and in which this input port is defined by a sun gear of the reduction gear arranged coaxially to the X axis and fixed to the first end PS.

Furthermore, the crankshaft TS is rotatably supported by a pair of bearings mounted longitudinally opposite to the electric motor WD within housings made on the internal walls of the crankcase 1 defining the first compartment V1. The epicyclic reduction unit 3 has a gear carrier 6 carrying at least one stepped-type satellite unit 4. Stepped-type satellites are known and consist of a first wheel 4a and a second wheel 4b mutually connected in a coaxial manner.

In particular, each satellite group comprises a first gear wheel 4a with a first diameter, and a second gear wheel 4b with a second diameter smaller than the first diameter of the first wheel, connected to each other in torque transmission via a shaft 4c parallel to the X axis. The first gear wheel 4a engages in torque transmission on the sun gear 2. In this way, the first, larger gear wheel 4a rotates the shaft 4c, which transmits the torque to the second, smaller gear wheel 4b. Furthermore, the reduction unit comprises a crown gear 5 with internal teeth, coaxial to the X axis, rigidly constrained to the casing 1, and on which the second gear wheel 4b meshes. According to a further aspect of the present invention, the electric axle A comprises a differential DF at least partially nested in the reduction unit, in particular between the planetary gear set 4 of the reduction unit 3. The reduction unit 3 comprises a carrier 6 connected for torque transmission to the differential housing in a manner known to those skilled in the art, and integral with an input port 6a of the differential. The shaft 4c is rotatably supported by the carrier via at least one bearing. The compartment V2 housing the reduction unit 3 and the differential DF is closed by a first flanged cover 7 arranged on the side opposite the electric machine WD with respect to the reduction unit 3 and the differential DF, and rigidly connected to the casing 1. The first and second half-shafts HS, HS' are connected for torque transmission to the differential DF in a known manner.

The differential unit may be of the open type, e.g. bevel gears, or epicyclic gears, or even limited-slip or controlled-slip gears capable of performing torque vectoring functions.

The first flanged cover 7 is crossed by the second axle shaft HS' through a special opening.

Furthermore, a bearing is provided proximal to the hole in the first flanged cover to rotatably support the carrier 6 and the differential DF. The first half-shaft HS extends longitudinally from the differential DF in the opposite direction to the second half-shaft HS', and specifically, it extends inside the drive shaft TS. The second end SS of the drive shaft TS is located in a third compartment V3 opposite the second compartment V2 with respect to the electric motor WD. This third compartment is closed by a second flanged cover 8 rigidly fixed to the crankcase 1, and the first half-shaft HS passes through the flanged cover 8 through a special opening. Furthermore, a bearing is provided in the opening of the second flanged cover to support the first half-shaft HS. The electric axle A in Fig. 6 includes a parking wheel W permanently fixed to the drive shaft TS, as described previously.

The parking wheel W is fixed to the drive shaft proximal to the second end SS. This parking wheel can be locked in use to the crankcase 1 in a releasable manner, by means of the locking device LK shown in figures 1 - 3, 5. For example, the locking device consists of a pawl PWL and a movable slider C rigidly fixed to the crankcase 1, in which the pawl PWL can be inserted radially between the teeth of the wheel W to block its rotation, see figure 1a. In this way, when the parking wheel W is constrained to the crankcase 1, the rotation of the crankshaft TS is blocked and therefore, and as can be understood, also the rotation of the first and second half-axles, in both directions of rotation, effectively performing the parking lock function of the vehicle. The mounting arrangement of the parking wheel W is particularly advantageous because when the parking wheel W is constrained to the crankcase 1, a reduced load acts on it thanks to the connection of the crankshaft TS with the sun gear 2 which, due to its construction configuration, transmits a lower output torque than the input torque to the reduction unit 3, i.e. coming from the half-shafts HS, HS'. Therefore, when the vehicle is stationary, a reduced load acts on the parking wheel W which results in a lower load acting on the locking device LK and therefore a lower stress on the same against unlocking, to the benefit of a significant reduction in the robustness, size and weight of the locking system. It should be noted that it is possible to provide between the WD electric machine and the DF differential, as an alternative to the epicyclic reduction unit 3, any type of coaxial reducer, such as a simple epicyclic coaxial reducer, or a multi-stage epicyclic reducer, single-speed reducers with one or more speeds, even of the multi-axis type with parallel axes of the off-axis type according to the coupling architectures known to experts in the field.

According to a further aspect of the present invention, the axle comprises a lubrication system for the differential DF and/or the reduction unit 3, and in which at least a portion of the first half-shaft HS defines a duct of the lubrication system, connected by means of a rotating hydraulic joint to a remaining part of the lubrication system, preferably in a position proximal to the second end SS. Preferably, the first half-shaft HS comprises two portions disconnectable from each other by means of a disconnecting joint 10, and in which a first portion 10a is rigidly connected to said differential and a second portion 10b is operatively connected to a vehicle wheel W1 by means of a sliding splined coupling 10c operating with a second half HS" of the half-shaft HS, and in which said first portion also defines the duct of the lubrication system with respect to the casing portion 8 indicated above. When open, this disconnection joint effectively disconnects the entire transmission and the electric machine from the wheels, allowing, for example, vehicle towing operations.

The first portion 10a has a longitudinal end 11 preferably located inside the hole of the second flanged cover 8 and is engaged with a bearing mounted in this hole to support the first HS axle shaft. Specifically, on this longitudinal end 11 is an inlet port 12 of the lubrication duct that extends in use through the first portion of the HS axle shaft until it reaches the end of the same connected to the differential bevel gear 9, on which at least one outlet port 13 is provided. In use, the lubrication line 9 carries a lubricating fluid, e.g. oil, in the differential and/or the reduction unit, and this feature provides greater lubrication to them without having to make design or space changes to the other components mounted inside the crankcase 1 to accommodate the lubrication line. The lubrication line 9 can also be connected to a vehicle lubricating fluid reservoir, for example, through a port built into the crankcase 1, or it can be connected to the delivery line of an oil pump inserted inside the crankcase of the same axle or fixed to it.

This disconnection unit, if activated, effectively inhibits the functions performed by the parking unit; its activation therefore occurs as an alternative to parking in those conditions that require its use.

Optionally, a differential locking unit 13 can also be provided, consisting of a sliding sleeve fitted onto a hub carried by the HS' axle shaft and controllably connecting said sliding sleeve to a hub carried by the differential case. This system, when activated by locking one of the two axle shafts from rotation relative to the gearbox, effectively locks all the differential components relative to the differential itself, thus providing locking functions useful in cases of low grip on one of the two wheels and for vehicle breakdowns.

Optionally, additional HR and HR' wheel reduction units, either portal type or coaxial with epicyclic gears, can be provided between the HS' and HS'' axle shafts and the W1 and W1 wheels.

## Claims

1. System for damping torsional stresses peak of a parking wheel (W), wherein the system comprises the parking wheel and a related drive shaft to which the parking wheel is associated by means of a splined coupling, wherein the splined coupling is created between a sleeve (S) and the drive shaft, wherein the parking wheel is fixed to the sleeve, wherein the sleeve and the drive shaft are coupled by means of a first and a second splined coupling (S1, S2) suitably spaced axially from each other, wherein the parking wheel is associated with the sleeve at the second splined coupling (S2) and wherein the first splined coupling (S1) defines a first connection stiffness value between the drive shaft and the sleeve, greater than a second stiffness value defined by the second splined coupling (S2) between the drive shaft and the sleeve.

2. System according to claim 1, wherein said drive shaft (TS) is rigid with respect to said sleeve (S) and wherein said first connection stiffness value is obtained by means of a first, approximately zero, clearance between the flanks of respective teeth of the first splined coupling (S1) and wherein said second connection stiffness value is obtained by means of a second clearance between the flanks of respective teeth of the second splined coupling (S2), wherein the second clearance is greater than the first clearance.

3. System according to claim 2, wherein under stationary conditions, said flanks of said respective teeth of the second splined coupling (S2) are mutually spaced.

4. System according to claim 3, wherein a first angular phasing of a first toothing of the second splined coupling is equal to a second angular phasing of the corresponding second toothing of the second splined coupling.

5. System according to any of the claims, wherein said drive shaft (TS) comprises at least one weakening zone (Sb) arranged between said first and second splined couplings (S1, S2), to obtain a reduction in torsional stiffness at the weakening zone.

6. System according to claim 5, wherein said weakening includes a reduction in the cross-section of the drive shaft TS and/or at least one radial groove, through or blind with respect to the walls of the drive shaft TS.

7. System according to any of the preceding claims, wherein said sleeve (S) comprises at least one further weakening zone (Sb) arranged between said first (S1) and second (S2) splined couplings, to obtain a reduction in torsional stiffness at the further weakening zone.

8. System according to claim 7, wherein said weakening includes a reduction in the section of the sleeve (S) and/or at least one radial groove, through or blind with respect to the walls of the sleeve (S).

9. Electric axle comprising an electric machine and a drive shaft (TS) operatively connected to or defining a drive shaft of the electric machine, comprising a parking lock system (LK) configured to reversibly constrain said drive shaft to a casing (1) of the electric axle, wherein the parking lock system comprises a parking wheel (W) associated with said drive shaft (TS) by means of a torsional stress peak damping system according to any of claims 1 - 8.

10. Electric axle (A) according to claim 9, of the on-axis type for a vehicle, comprising:

> - said casing (1), in which are housed
> - said electric machine (WD), comprising said drive shaft (TS) of tubular shape having a first end (PS) and a second end (SS) opposite to the first, emerging with respect to a rotor (RT) of the electric machine (WD),
> - a reduction unit (3) comprising an input port (2) connectable for torque transmission to the drive shaft (TS), arranged axially with respect to the electric machine (WD), proximal to the first end (PS),
> - a differential (DF) at least partially nested in the reduction unit,
> - a first and second half-shafts (HS, HS') coaxial with each other and operationally connected to said differential (DF), wherein said first half-shaft (HS) is nested in the drive shaft (TS),
> - said parking lock system (LK) configured to reversibly lock said input port (2) of the reduction unit (3) to said casing (1).

11. Axle according to claim 10, wherein said locking system (LK) is arranged proximal to said second end (SS).

12. Axle according to claim 10 or 11, wherein said locking system (LK) comprises a parking wheel (W) stably fixed to the drive shaft (TS), wherein the drive shaft is stably connected to said input port (2) of the reduction unit (3).

13. An axle according to any of the preceding claims 10 - 12, wherein said reduction gear (3) is of the epicyclic type and comprises a sun gear defining said first port (2), a planetary gear comprising

> - at least one stepped planet gear (4) consisting of a first wheel (4a) and a second wheel (4b), wherein said first wheel is arranged to engage said sun gear (2) and said second wheel is arranged to engage a fixed crown (5) integral with the casing (1), and
> - a carrier (6) configured to rotate said at least one planet gear, and being integral with an input port (6a) of the differential.

14. A vehicle equipped with an axle according to any of the preceding claims 9 - 13.

A

LK
C
PWL
W
S
X
S2
TS

Fig. 1a
SECTION Z-Z

Z
LK
W
Sz
S2
Z
S
Sy
S1
TS

K
WD
ST
RT
X

TR

Fig. 1

S1
D1'
TS
D1

Fig. 1b

D2'
TS
S2
D2

Fig. 1c

Fig. 2 (Prior art)

KTOT1= (K1*K5)/(K1+K5)

A

WD

K

LK

K5

K4

S

W

ST

TR

RT

S2

S1

K1

TS

Fig. 3

KTOT2= (K1*K4)/(K1+K4)

S2 = FLANKS IN MUTUAL CONTACT

KTOT1= (K1*K5)/(K1+K5)

SL

Torque [Nm]

Fig. 4

Time [s]

KTOT1= (K1*K5)/(K1+K5)

Torque [Nm]

SL

Fig. 4a

Time [s]

Fig. 5

Fig. 6

Europäisches
Patentamt

European
Patent Office

Office européen
des brevets

# EUROPEAN SEARCH REPORT

**Application Number**

EP 25 22 3986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/263125 A1 (BOSCH GMBH ROBERT [DE]) 22 December 2022 (2022-12-22) * page 10, line 25 - page 11, line 35; figures 5,6 * * page 10, line 25 - page 11, line 35 * ----- | 1-14 | INV. F16H63/34 ADD. F16D1/10 |
| A | DE 10 2011 016584 A1 (MAGNA POWERTRAIN AG & CO KG [AT]) 11 October 2012 (2012-10-11) * abstract; figures 1-3 * * paragraphs [0021] - [0025] * ----- | 1-14 | |

**TECHNICAL FIELDS SEARCHED (IPC)**

F16H
F16D

The present search report has been drawn up for all claims

| Place of search | Date of completion of the search | Examiner |
|---|---|---|
| Munich | 15 April 2026 | Werner, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .................................................................................................

& : member of the same patent family, corresponding
    document

EPO FORM 1503 03.82 (P04C01)

15

## ANNEX TO THE EUROPEAN SEARCH REPORT
## ON EUROPEAN PATENT APPLICATION NO.

EP 25 22 3986

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | Publication date | Patent family member(s) | Publication date |
|---|---|---|---|
| WO 2022263125 A1 | 22-12-2022 | DE 102021206174 A1<br>EP 4356027 A1<br>WO 2022263125 A1 | 22-12-2022<br>24-04-2024<br>22-12-2022 |
| DE 102011016584 A1 | 11-10-2012 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022106681 A

- US 10630140 B